(19) Europäisches Patentamt
European Patent Office
Office européen des brevets

(11) **EP 4 554 158 A1**

(12) **EUROPEAN PATENT APPLICATION**
published in accordance with Art. 153(4) EPC

(43) Date of publication:
**14.05.2025 Bulletin 2025/20**

(21) Application number: **23851456.6**

(22) Date of filing: **29.06.2023**

(51) International Patent Classification (IPC):
***H04L 27/26*** *(2006.01)*

(52) Cooperative Patent Classification (CPC):
**H04B 7/22; H04L 27/26**

(86) International application number:
**PCT/CN2023/104287**

(87) International publication number:
**WO 2024/032229 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 CN 202210970268**

(71) Applicant: **Huawei Technologies Co., Ltd.
Shenzhen, Guangdong 518129 (CN)**

(72) Inventors:
• **QU, Weilin
  Shenzhen, Guangdong 518129 (CN)**
• **WU, Yiling
  Shenzhen, Guangdong 518129 (CN)**
• **JIN, Zhe
  Shenzhen, Guangdong 518129 (CN)**
• **CHEN, Jun
  Shenzhen, Guangdong 518129 (CN)**

(74) Representative: **Goddar, Heinz J. et al
Boehmert & Boehmert
Anwaltspartnerschaft mbB
Pettenkoferstrasse 22
80336 München (DE)**

(54) **COMMUNICATION METHOD AND APPARATUS, AND DEVICE AND STORAGE MEDIUM**

(57)      This application provides a communication method and apparatus, a device, and a storage medium. The method includes: performing windowing processing on a frequency-domain signal of a first signal by using a window signal, to obtain a first frequency-domain signal, where the first signal is an OFDM signal that carries M amplitude shift keying modulation symbols, and M is a positive integer, a second frequency-domain signal is a frequency-domain signal to which the first frequency-domain signal is mapped on a first frequency-domain resource, the first frequency-domain resource is an upper half or a lower half of a frequency-domain resource occupied by the first frequency-domain signal, a second signal is a time-domain signal of the second frequency-domain signal, and the second signal is an OFDM signal that carries the M amplitude shift keying modulation symbols; and sending the second signal. It is expected to improve an effective spectral efficiency of an amplitude shift keying modulation signal in backscatter communication.

400

First device — Second device

S410: Perform windowing processing on a frequency-domain signal of a first signal by using a window signal, to obtain a first frequency-domain signal, where the first signal is an OFDM signal that carries M amplitude shift keying modulation symbols, and M is a positive integer, where a second frequency-domain signal is a frequency-domain signal to which the first frequency-domain signal is mapped in a first frequency-domain unit, the first frequency-domain unit is a sideband of an upper half or a lower half of a bandwidth occupied by the first frequency-domain signal, a second signal is a time-domain signal of the second frequency-domain signal, and the second signal is an OFDM signal that carries the M amplitude shift keying modulation symbols

S420: Send the second signal

S430: Determine the M amplitude shift keying modulation symbols carried in the second signal

FIG. 4

**EP 4 554 158 A1**

## Description

This application claims priority to Chinese Patent Application No. 202210970268.2, filed with the China National Intellectual Property Administration on August 12, 2022 and entitled "COMMUNICATION METHOD AND APPARATUS, DEVICE, AND STORAGE MEDIUM", which is incorporated herein by reference in its entirety.

## TECHNICAL FIELD

This application relates to the field of communication technologies, and in particular, to a communication method and apparatus, a device, and a storage medium.

## BACKGROUND

With wide application of machine-type communication (machine-type communication, MTC) and Internet of things (Internet of things, IoT) communication, IoT devices have been increasingly deployed in people's lives. In some communication systems, for example, a 5th generation mobile communication system (5th generation mobile communication system, 5G) or a 5.5G communication system, to reduce a power consumption of the IoT device and make the IoT device easier to carry, the IoT device is implemented as a backscatter communication-based terminal.

The backscatter communication terminal is usually enabled with an amplitude shift keying modulation (for example, OOK or ASK modulation) signal. The amplitude shift keying modulation signal is a double-sideband modulation signal, and an effective spectral efficiency of the amplitude shift keying modulation signal is low. However, how to improve the effective spectral efficiency of the amplitude shift keying modulation signal in backscatter communication is an urgent problem to be resolved currently.

## SUMMARY

Embodiments of this application provide a communication method and apparatus, a device, and a storage medium, to improve an effective spectral efficiency of an amplitude shift keying modulation signal in backscatter communication.

According to a first aspect, an embodiment of this application provides a communication method. The method includes: performing windowing processing on a frequency-domain signal of a first signal by using a window signal, to obtain a first frequency-domain signal, where the first signal is an orthogonal frequency-division multiplexing OFDM signal that carries M amplitude shift keying modulation symbols, and M is a positive integer, where a second frequency-domain signal is a frequency-domain signal to which the first frequency-domain signal is mapped on a first frequency-domain resource, the first frequency-domain resource is an upper half or a lower half of a frequency-domain resource occupied by the first frequency-domain signal, a second signal is a time-domain signal of the second frequency-domain signal, and the second signal is an OFDM signal that carries the M amplitude shift keying modulation symbols; and sending the second signal.

According to the communication method provided in the first aspect, the windowing processing is performed on the frequency-domain signal of the first signal by using the window signal, so that a time-domain waveform of a frequency-domain single-sideband signal, namely, the second signal, of the first signal obtained through windowing is closer to a time-domain waveform of the double-sideband first signal, and a feature of improving a transmission spectral efficiency of a single-sideband amplitude shift modulation signal to 100% is maintained. In this way, a transmission spectral efficiency of a downlink signal is improved, transmission performance of the downlink signal is ensured, and additional implementation complexity and a power consumption of a receive end are avoided while a criterion for subcarrier orthogonality of an OFDM system is ensured.

In a possible implementation, the performing windowing processing on a frequency-domain signal of a first signal by using a window signal, to obtain a first frequency-domain signal includes: a third frequency-domain signal is a frequency-domain signal to which a frequency-domain signal of the window signal is mapped on a second frequency-domain resource, the second frequency-domain resource is the same as a frequency-domain resource occupied by the frequency-domain signal of the first signal, and a frequency-domain resource occupied by the frequency-domain signal of the window signal is greater than or equal to the frequency-domain resource occupied by the frequency-domain signal of the first signal; multiplying the frequency-domain signal of the first signal by a signal to which the third frequency-domain signal is mapped on a same subcarrier, to obtain the first frequency-domain signal.

According to the communication method provided in this implementation, a frequency-domain resource occupied by the third frequency-domain signal is the same as the frequency-domain resource occupied by the frequency-domain signal of the first signal. **In** this case, regardless of whether the frequency-domain resource occupied by the frequency-domain signal of the window signal is greater than or equal to the frequency-domain resource occupied by the frequency-domain signal of the first signal, the windowing processing on the first signal based on the window signal is implemented. This improves effectiveness of the windowing processing. Waveform shaping on the time-domain waveform of the first signal can be effectively performed through the windowing processing on the first signal, so that the time-domain waveform of the single-sideband second signal is subsequently close to the time-domain waveform of the first signal. This improves the transmission performance of the downlink signal.

In a possible implementation, the window signal includes at least one first sub-signal and/or at least one second sub-signal, a time domain length of the first sub-signal is the same as a duration of consecutive first modulation symbols in a segment carried in the first signal, and/or a time domain length of the second sub-signal is the same as a duration of consecutive second modulation symbols in a segment carried in the first signal, where the M amplitude shift keying modulation symbols include the first modulation symbol and/or the second modulation symbol.

According to the communication method provided in this implementation, different window signals are added in segments based on a length of consecutive modulation symbols, so that the time-domain waveform of the second signal obtained by performing windowing processing by using the window signal is subsequently closer to the time-domain waveform of the first signal. This further improves the transmission performance of the downlink signal.

In a possible implementation, the window signal includes at least one first sub-signal and/or at least one second sub-signal, a frequency of the first sub-signal is associated with a quantity of consecutive first modulation symbols in the segment carried in the first signal, and/or a frequency of the second sub-signal is associated with a quantity of consecutive second modulation symbols in the segment carried in the first signal.

According to the communication method provided in this implementation, an association range of a frequency component included in the window signal is determined, and a specific window signal is effectively defined preliminarily, so that the time-domain waveform of the second signal obtained by performing windowing processing by using the window signal is closer to the time-domain waveform of the first signal.

In a possible implementation, the frequency of the first sub-signal is inversely proportional to the quantity of consecutive first modulation symbols in the segment carried in the first signal; and/or the frequency of the second sub-signal is inversely proportional to the quantity of consecutive second modulation symbols in the segment carried in the first signal.

According to the communication method provided in this implementation, a specific association relationship of a frequency corresponding to the window signal is determined, so that the time-domain waveform of the second signal obtained by performing windowing processing by using the window signal is closer to the time-domain waveform of the first signal.

In a possible implementation, the frequency of the first sub-signal is equal to a reciprocal of the duration of the consecutive first modulation symbols in the segment carried in the first signal; and/or the frequency of the second sub-signal is equal to a reciprocal of the duration of the consecutive second modulation symbols in the segment carried in the first signal.

According to the communication method provided in this implementation, the frequency component included in the window signal is further determined, and a feature of the window signal is effectively defined and obtained, so that the time-domain waveform of the second signal obtained by performing windowing processing by using the window signal is closer to the time-domain waveform of the first signal.

Optionally, any sub-signal of the window signal includes at least one of the following: a cosine signal; a sine signal; a power of the cosine signal; and a power of the sine signal.

In a possible implementation, any sub-signal of the window signal includes at least one of the following: a power of a cosine signal and a power of a sine signal, where at least one of a coefficient to the power of the cosine signal and a coefficient to the power of the sine signal is less than or equal to 1.

According to the communication method provided in this implementation, when the coefficient to the power of the sine signal or the coefficient to the power of the cosine signal is less than or equal to 1, a waveform of the power of the sine signal or a waveform of the power of the cosine signal is flat, and a smaller coefficient to the power indicates a flatter waveform of the power of the sine signal or the cosine signal. A valid window signal is effectively defined and obtained, and the flatter waveform is closer to a waveform of an ideal OOK/ASK signal.

In a possible implementation, the window signal is a raised cosine roll-off window signal. According to the communication method provided in this implementation, a raised cosine roll-off function is a window signal with a high use probability in waveform shaping, namely, a window signal that is easy to reach a consensus. The windowing processing is performed on the first signal by using the raised cosine roll-off window signal to obtain the second signal, so that the time-domain waveform of the first signal closer to the time-domain waveform of the first signal can also be obtained.

According to a second aspect, an embodiment of this application provides a communication method. The method includes: receiving a second signal, where the second signal is an OFDM signal that carries M amplitude shift keying modulation symbols, the second signal is a time-domain signal of a second frequency-domain signal, the second frequency-domain signal is a frequency-domain signal to which a first frequency-domain signal is mapped on a first frequency-domain resource, the first frequency-domain resource is an upper half or a lower half of a frequency-domain resource occupied by the first frequency-domain signal, the first frequency-domain signal is a frequency-domain signal obtained by performing windowing processing on a first signal by using a window signal, and the first signal is an OFDM signal that carries the M amplitude shift keying modulation symbols; and determining the M amplitude shift keying modulation symbols carried in the second signal.

In a possible implementation, a third frequency-domain signal is a frequency-domain signal to which a frequency-domain signal of the window signal is mapped on a second frequency-domain resource, the second frequency-domain resource is the same as a frequency-domain resource occupied by a frequency-domain signal of the first signal, a frequency-domain resource occupied by the frequency-domain signal of the window signal is greater than or equal to the frequency-domain resource occupied by the frequency-domain signal of the first signal, and a signal obtained by multiplying the frequency-domain signal of the first signal by a signal to which the third frequency-domain signal is mapped on a same subcarrier is equal to a signal of the first frequency-domain signal on the same subcarrier.

In a possible implementation, the window signal includes at least one first sub-signal and/or at least one second sub-signal, a time domain length of the first sub-signal is the same as a duration of consecutive first modulation symbols in a segment carried in the first signal, and/or a time domain length of the second sub-signal is the same as a duration of consecutive second modulation symbols in a segment carried in the first signal, where the M amplitude shift keying modulation symbols include the first modulation symbol and/or the second modulation symbol.

In a possible implementation, the window signal includes at least one first sub-signal and/or at least one second sub-signal, a frequency of the first sub-signal is associated with a quantity of consecutive first modulation symbols in the segment carried in the first signal, and/or a frequency of the second sub-signal is associated with a quantity of consecutive second modulation symbols in the segment carried in the first signal.

In a possible implementation, the frequency of the first sub-signal is inversely proportional to the quantity of consecutive first modulation symbols in the segment carried in the first signal; and/or the frequency of the second sub-signal is inversely proportional to the quantity of consecutive second modulation symbols in the segment carried in the first signal.

In a possible implementation, the frequency of the first sub-signal is equal to a reciprocal of the duration of the consecutive first modulation symbols in the segment carried in the first signal; and/or the frequency of the second sub-signal is equal to a reciprocal of the duration of the consecutive second modulation symbols in the segment carried in the first signal.

In a possible implementation, any sub-signal of the window signal includes at least one of the following: a cosine signal; a sine signal; a power of the cosine signal; and a power of the sine signal.

In a possible implementation, any sub-signal of the window signal includes at least one of the following: a power of a cosine signal and a power of a sine signal, where at least one of a coefficient to the power of the cosine signal and a coefficient to the power of the sine signal is less than or equal to 1.

In a possible implementation, the window signal is a raised cosine roll-off window signal.

For beneficial effects of the communication method provided in the second aspect and the possible implementations of the second aspect, refer to the beneficial effects brought by the first aspect and the possible implementations of the first aspect. Details are not described herein again.

According to a third aspect, an embodiment of this application provides a communication method. The method includes: A first device performs windowing processing on a frequency-domain signal of a first signal by using a window signal, to obtain a first frequency-domain signal, where the first signal is an OFDM signal that carries M amplitude shift keying modulation symbols, and M is a positive integer, where a second frequency-domain signal is a frequency-domain signal to which the first frequency-domain signal is mapped on a first frequency-domain resource, the first frequency-domain resource is an upper half or a lower half of a frequency-domain resource occupied by the first frequency-domain signal, a second signal is a time-domain signal of the second frequency-domain signal, and the second signal is an OFDM signal that carries the M amplitude shift keying modulation symbols. The first device sends the second signal to a second device. The second device determines the M amplitude shift keying modulation symbols carried in the second signal.

In a possible implementation, that a first device performs windowing processing on a frequency-domain signal of a first signal by using a window signal, to obtain a first frequency-domain signal includes: a third frequency-domain signal is a frequency-domain signal to which a frequency-domain signal of the window signal is mapped on a second frequency-domain resource, the second frequency-domain resource is the same as a frequency-domain resource occupied by the frequency-domain signal of the first signal, and a frequency-domain resource occupied by the frequency-domain signal of the window signal is greater than or equal to the frequency-domain resource occupied by the frequency-domain signal of the first signal; multiplying the frequency-domain signal of the first signal by a signal to which the third frequency-domain signal is mapped on a same subcarrier, to obtain the first frequency-domain signal.

In a possible implementation, the window signal includes at least one first sub-signal and/or at least one second sub-signal, a time domain length of the first sub-signal is the same as a duration of consecutive first modulation symbols in a segment carried in the first signal, and/or a time domain length of the second sub-signal is the same as a duration of consecutive second modulation symbols in a segment carried in the first signal, where the M amplitude shift keying modulation symbols include the first modulation symbol and/or the second modulation symbol.

In a possible implementation, the window signal includes at least one first sub-signal and/or at least one second sub-signal, a frequency of the first sub-signal is associated with a quantity of consecutive first modulation symbols in the segment carried in the first signal, and/or a frequency of the second sub-signal is associated with a quantity of consecutive second modulation symbols in the segment carried in the first signal.

In a possible implementation, the frequency of the first sub-signal is inversely proportional to the quantity of consecutive first modulation symbols in the segment carried in the first signal; and/or the frequency of the second sub-signal is inversely proportional to the quantity of consecutive second modulation symbols in the segment carried in the first signal.

In a possible implementation, any sub-signal of the window signal includes at least one of the following: a cosine signal; a sine signal; a power of the cosine signal; and a power of the sine signal.

In a possible implementation, any sub-signal of the window signal includes at least one of the following: a power of a cosine signal and a power of a sine signal, where at least one of a coefficient to the power of the cosine signal and a coefficient to the power of the sine signal is less than or equal to 1.

For beneficial effects of the communication method provided in the third aspect and the possible implementations of the third aspect, refer to the beneficial effects brought by the first aspect and the possible implementations of the first aspect. Details are not described herein again.

According to a fourth aspect, an embodiment of this application provides a communication apparatus, including: a processing unit, configured to perform windowing processing on a frequency-domain signal of a first signal by using a window signal, to obtain a first frequency-domain signal, where the first signal is an orthogonal frequency-division multiplexing OFDM signal that carries M amplitude shift keying modulation symbols, and M is a positive integer, where a second frequency-domain signal is a frequency-domain signal to which the first frequency-domain signal is mapped on a first frequency-domain resource, the first frequency-domain resource is an upper half or a lower half of a frequency-domain resource occupied by the first frequency-domain signal, a second signal is a time-domain signal of the second frequency-domain signal, and the second signal is an OFDM signal that carries the M amplitude shift keying modulation symbols; a transceiver unit, configured to send the second signal.

In a possible implementation, the processing unit is specifically configured to: a third frequency-domain signal is a frequency-domain signal to which a frequency-domain signal of the window signal is mapped on a second frequency-domain resource, the second frequency-domain resource is the same as a frequency-domain resource occupied by the frequency-domain signal of the first signal, and a frequency-domain resource occupied by the frequency-domain signal of the window signal is greater than or equal to the frequency-domain resource occupied by the frequency-domain signal of the first signal; multiply the frequency-domain signal of the first signal by a signal to which the third frequency-domain signal is mapped on a same subcarrier, to obtain the first frequency-domain signal.

In a possible implementation, the window signal includes at least one first sub-signal and/or at least one second sub-signal, a time domain length of the first sub-signal is the same as a duration of consecutive first modulation symbols in a segment carried in the first signal, and/or a time domain length of the second sub-signal is the same as a duration of consecutive second modulation symbols in a segment carried in the first signal, where the M amplitude shift keying modulation symbols include the first modulation symbol and/or the second modulation symbol.

In a possible implementation, the window signal includes at least one first sub-signal and/or at least one second sub-signal, a frequency of the first sub-signal is associated with a quantity of consecutive first modulation symbols in the segment carried in the first signal, and/or a frequency of the second sub-signal is associated with a quantity of consecutive second modulation symbols in the segment carried in the first signal.

In a possible implementation, the frequency of the first sub-signal is inversely proportional to the quantity of consecutive first modulation symbols in the segment carried in the first signal; and/or the frequency of the second sub-signal is inversely proportional to the quantity of consecutive second modulation symbols in the segment carried in the first signal.

In a possible implementation, the frequency of the first sub-signal is equal to a reciprocal of the duration of the consecutive first modulation symbols in the segment carried in the first signal; and/or the frequency of the second sub-signal is equal to a reciprocal of the duration of the consecutive second modulation symbols in the segment carried in the first signal.

In a possible implementation, when the first sub-signal and the second sub-signal have a same time domain length, the first sub-signal and the second sub-signal are different.

In a possible implementation, any sub-signal of the window signal includes at least one of the following:

     a cosine signal;
     a sine signal;
     a power of the cosine signal; and
     a power of the sine signal.

In a possible implementation, any sub-signal of the window signal includes at least one of the following:

     a power of a cosine signal; and
     a power of a sine signal, where
     at least one of a coefficient to the power of the cosine signal and a coefficient to the power of the sine signal is less than or equal to 1.

In a possible implementation, the window signal is a raised cosine roll-off window signal.

For beneficial effects of the communication apparatus provided in the fourth aspect and the possible implementations of the fourth aspect, refer to the beneficial effects brought by the first aspect and the possible implementations of the first aspect. Details are not described herein again.

According to a fifth aspect, an embodiment of this application provides a communication apparatus, including: a transceiver unit, configured to receive a second signal, where the second signal is an OFDM signal that carries M amplitude shift keying modulation symbols, the second signal is a time-domain signal of a second frequency-domain signal, the second frequency-domain signal is a frequency-domain signal to which a first frequency-domain signal is mapped on a first frequency-domain resource, the first frequency-domain resource is an upper half or a lower half of a frequency-domain resource occupied by the first frequency-domain signal, the first frequency-domain signal is a frequency-domain signal obtained by performing windowing processing on a first signal by using a window signal, and the first signal is an OFDM signal that carries the M amplitude shift keying modulation symbols; and a processing unit, configured to determine the M amplitude shift keying modulation symbols carried in the second signal.

In a possible implementation, a third frequency-domain signal is a frequency-domain signal to which a frequency-domain signal of the window signal is mapped on a second frequency-domain resource, the second frequency-domain resource is the same as a frequency-domain resource occupied by a frequency-domain signal of the first signal, a frequency-domain resource occupied by the frequency-domain signal of the window signal is greater than or equal to the frequency-domain resource occupied by the frequency-domain signal of the first signal, and a signal obtained by multiplying the frequency-domain signal of the first signal by a signal to which the third frequency-domain signal is mapped on a same subcarrier is equal to a signal of the first frequency-domain signal on the same subcarrier.

In a possible implementation, the window signal includes at least one first sub-signal and/or at least one second sub-signal, a time domain length of the first sub-signal is the same as a duration of consecutive first modulation symbols in a segment carried in the first signal, and/or a time domain length of the second sub-signal is the same as a duration of consecutive second modulation symbols in a segment carried in the first signal, where the M amplitude shift keying modulation symbols include the first modulation symbol and/or the second modulation symbol.

In a possible implementation, the window signal includes at least one first sub-signal and/or at least one second sub-signal, a frequency of the first sub-signal is associated with a quantity of consecutive first modulation symbols in the segment carried in the first signal, and/or a frequency of the second sub-signal is associated with a quantity of consecutive second modulation symbols in the segment carried in the first signal.

In a possible implementation, the frequency of the first sub-signal is inversely proportional to the quantity of consecutive first modulation symbols in the segment carried in the first signal; and/or the frequency of the second sub-signal is inversely proportional to the quantity of consecutive second modulation symbols in the segment carried in the first signal.

In a possible implementation, the frequency of the first sub-signal is equal to a reciprocal of the duration of the consecutive first modulation symbols in the segment carried in the first signal; and/or the frequency of the second sub-signal is equal to a reciprocal of the duration of the consecutive second modulation symbols in the segment carried in the first signal.

In a possible implementation, any sub-signal of the window signal includes at least one of the following:

    a cosine signal;
    a sine signal;
    a power of the cosine signal; and
    a power of the sine signal.

In a possible implementation, any sub-signal of the window signal includes at least one of the following:

    a power of a cosine signal; and
    a power of a sine signal, where
    at least one of a coefficient to the power of the cosine signal and a coefficient to the power of the sine signal is less than or equal to 1.

In a possible implementation, the window signal is a raised cosine roll-off window signal.

For beneficial effects of the communication apparatus provided in the fifth aspect and the possible implementations of the fifth aspect, refer to the beneficial effects brought by the first aspect and the possible implementations of the first aspect. Details are not described herein again.

According to a sixth aspect, an embodiment of this application provides a communication device, including a processor and a memory. The memory is configured to store a computer program, and the processor is configured to invoke and run the computer program stored in the memory, to perform the method in any one of the first aspect, the second aspect, or the possible implementations.

According to a seventh aspect, an embodiment of this application provides a communication system, including a first device and a second device. The first device is configured to implement the method in the first aspect or the possible implementations. The second device is configured to implement the method in the second aspect or the possible implementations.

According to an eighth aspect, an embodiment of this application provides a chip, including a processor. The processor is configured to invoke computer instructions from a memory and run the computer instructions, to enable a device in which the chip is installed to perform the method in any one of the first aspect, the second aspect, or the possible implementations.

According to a ninth aspect, an embodiment of this application provides a computer-readable storage medium, configured to store computer program instructions. A computer program enables a computer to perform the method in any one of the first aspect, the second aspect, or the possible implementations.

According to a tenth aspect, an embodiment of this application provides a computer program product, including computer program instructions. The computer program instructions enable a computer to perform the method in any one of the first aspect, the second aspect, or the possible implementations.

**BRIEF DESCRIPTION OF DRAWINGS**

FIG. 1 is a diagram of a communication system to which a communication method according to an embodiment of this application is applicable;

FIG. 2 is a diagram of a structure of a passive Internet of things system according to an embodiment of this application;

FIG. 3 is a diagram of a bandwidth of amplitude shift keying modulation signal according to an embodiment of this application;

FIG. 4 is a schematic interaction flowchart of a communication method according to an embodiment of this application;

FIG. 5 is a diagram of a time-domain waveform of an amplitude shift keying signal according to an embodiment of this application;

FIG. 6 is a diagram of a time-domain waveform of another amplitude shift keying signal according to an embodiment of this application;

FIG. 7a is a diagram of a time-domain waveform of a window signal according to an embodiment of this application;

FIG. 7b is a diagram of a time-domain waveform of another window signal according to an embodiment of this application;

FIG. 7c is a diagram of a frequency-domain signal of a window signal according to an embodiment of this application;

FIG. 8 is a diagram of a double-sideband frequency-domain signal according to an embodiment of this application;

FIG. 9 is a diagram of a time-domain waveform of a single-sideband signal according to an embodiment of this application;

FIG. 10 is a block diagram of an apparatus according to an embodiment of this application; and

FIG. 11 is another block diagram of an apparatus according to an embodiment of this application.

**DESCRIPTION OF EMBODIMENTS**

The following describes technical solutions of this application with reference to accompanying drawings.

A communication method provided in this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Network, NTN) system, a universal mobile telecommunications system (Universal Mobile Telecommunications System, UMTS), a wireless local area network (Wireless Local Area Network, WLAN), wireless fidelity (Wireless Fidelity, Wi-Fi), a 5th generation (5th-Generation, 5G) communication system, or another communication system.

In some embodiments, the communication system in embodiments of this application may be applied to a carrier aggregation (Carrier Aggregation, CA) scenario, may be applied to a dual connectivity (Dual Connectivity, DC) scenario, and may be further applied to a standalone (Standalone, SA) networking scenario.

Various embodiments are described with reference to a network device and a terminal device in embodiments of this application. The terminal device may also be referred to as user equipment (User Equipment, UE), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a station (STATION, ST) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, a vehicle-mounted device, a wearable device, a terminal device in a next-generation communication system, for example, an NR network, a terminal device in a future evolved public land mobile network (Public Land Mobile Network, PLMN), or the like.

In embodiments of this application, the terminal device may be a device deployed on land, including an indoor device, an outdoor device, a handheld device, a wearable device, or a vehicle-mounted device; may be a device deployed on water (for example, on a ship); or may be a device deployed in air (for example, on an airplane, a balloon, and a satellite).

In embodiments of this application, the terminal device may be a mobile phone (Mobile Phone), a tablet computer (Pad), a computer having a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self-driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like.

By way of example, and not limitation, in embodiments of this application, the terminal device may alternatively be a wearable device. The wearable device may also be referred to as a wearable intelligent device, and is a collective term for a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, the network device may be a device configured to communicate with a mobile device. The network device may be an access point (Access Point, AP) in a WLAN, a base transceiver station (Base Transceiver Station, BTS) in GSM or CDMA, a NodeB (NodeB, NB) in WCDMA, an evolved NodeB (evolved NodeB, eNB or eNodeB) in LTE, a relay station, an access point, a vehicle-mounted device, a wearable device, a network device or a gNB (gNB) in an NR network, a network device in a future evolved PLMN network, a network device in an NTN network, or the like.

By way of example, and not limitation, in embodiments of this application, the network device may have a mobility characteristic. For example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, or a high elliptical orbit (High Elliptical Orbit, HEO) satellite. In some embodiments, the network device may alternatively be a base station disposed at a location such as land or water.

In embodiments of this application, the network device may provide a service for a cell, and the terminal device communicates with the network device by using a transmission resource (for example, a frequency-domain resource, namely, a spectrum resource) used for the cell. The cell may be a cell corresponding to the network device (for example, a base station). The cell may belong to a macro base station, or may belong to a base station corresponding to a small cell (Small cell). The small cell herein may include a metro cell (Metro cell), a micro cell (Micro cell), a pico cell (Pico cell), a femto cell (Femto cell), and the like. These small cells have characteristics of small coverage and a low transmit power, and are suitable to provide a high-rate data transmission service.

It should be understood that specific forms of the network device and the terminal device are not limited in this application.

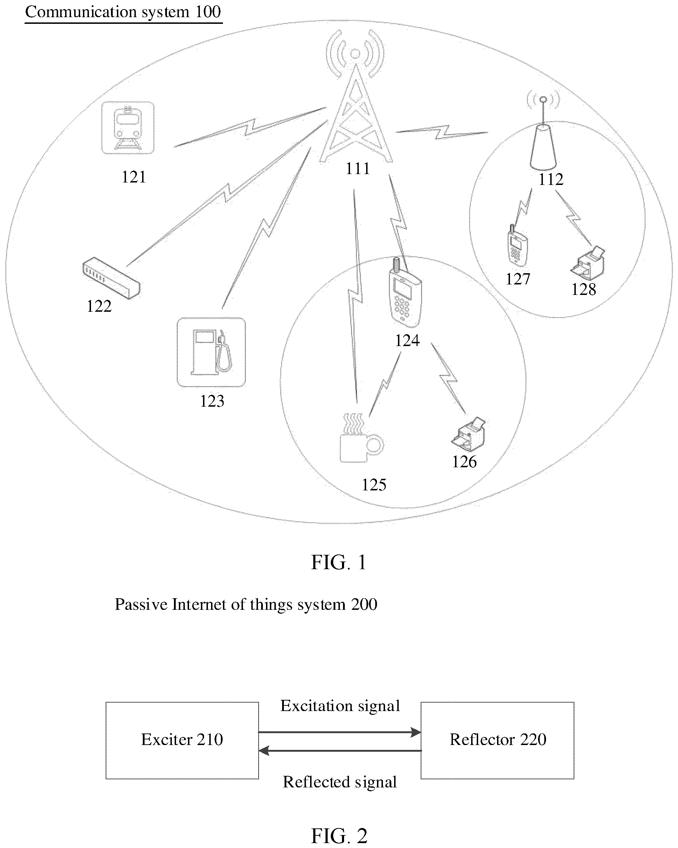

For ease of understanding of embodiments of this application, a communication system applicable to embodiments of this application is first described in detail with reference to FIG. 1. FIG. 1 is a diagram of a communication system to which a communication method according to an embodiment of this application is applicable. As shown in FIG. 1, the communication system 100 may include a network device and a terminal device. There may be one or more network devices and one or more terminal devices, for example, network devices 111 and 112 and terminal devices 121 to 128 shown in FIG. 1. In the communication system 100, the network device 111 may communicate with one or more of the terminal devices 121 to 126 via a wireless air interface, and the network device 111 may communicate with one or both of the terminal devices 127 and 128 via the network device 112. In addition, the terminal devices 124 to 126 may form a communication system 101. In the communication system 101, the terminal device 124 may communicate with one or both of the terminal devices 125 and 126 via a wireless air interface, and the network device 112 and the terminal devices 127 and 128 may form a communication system 102. In the communication system 102, the network device 112 may communicate with one or both of the terminal devices 127 and 128 via a wireless air interface.

It should be understood that the communication system 101 may be a subsystem of the communication system 100, or a communication system independent of the communication system 100. The communication system 102 may be a subsystem of the communication system 100, or a communication system independent of the communication system 100.

It should be further understood that FIG. 1 is merely an example, and shows two network devices and eight terminal devices in the communication system 100, three terminal devices in the communication system 101, and one network device and two terminal devices in the communication system 102. However, this shall not constitute any limitation on this application. Any one of the foregoing communication systems may include more or fewer network devices, or include more or fewer terminal devices. This is not limited in this embodiment of this application.

With wide application of machine-type communication (machine-type communication, MTC) and Internet of things (Internet of things, IoT) communication in a 5G NR system, IoT devices, for example, smart water meters, shared bicycles, and smart cities, environment monitoring, smart home, forest fire prevention, and the like that are targeted at sensing and data collection, have been increasingly deployed in people's lives. In the future, the IoT devices are ubiquitous, and may be embedded in all clothes, all packages, and all keys. Almost all offline objects can become online through enablement using Internet of things technologies. In addition, because the IoT devices are widely distributed and have a large quantity, the industry has increasingly strong demands for reducing costs and power consumptions of the IoT devices.

Therefore, to further popularize IoT, a smaller battery needs to be used or even a limitation of the battery needs to be completely removed; or a method for reducing a power consumption of a radio transceiver needs to be designed, to overcome limitation problems of costs, sizes, power consumptions, and the like of the IoT device. Therefore, the industry expects to introduce passive Internet of things (Passive IoT) or backscatter (Backscatter) communication in the field of 5G/5.5G Internet of things to reduce a power consumption of a terminal.

With reference to FIG. 2, in a passive Internet of things system 200, an exciter 210 may send an excitation signal (also referred to as a downlink signal below, including downlink signaling and/or downlink data) to a reflector 220 through a downlink. The reflector 220 obtains energy based on the excitation signal to send a reflected signal (also referred to as an uplink signal below) in an uplink.

The exciter 210 may be any device, for example, a reader (Reader) or a helper (Helper), configured to excite a passive/semi-passive terminal device. Optionally, the exciter 210 may be implemented as a network device, or the exciter 210 may be deployed on a network device. The network device may be any one of the network devices in the foregoing examples, for example, a base station device (including a series of base station devices such as a macro base station, a small cell, a micro base station, and a pole site). Certainly, a case in which the exciter 210 is implemented as a terminal device or deployed on a terminal device is not excluded in this application. The terminal device may be any one of the terminal devices in the foregoing examples.

The reflector 220 may be configured to perform backscatter communication. With reference to a radio frequency identification (radio frequency identification, RFID) technology, the reflector 220 may be a tag in the RFID technology, and may further include a passive tag and a semi-passive tag. Alternatively, the reflector 220 may be implemented as a terminal device, or the reflector 220 may be deployed on a terminal device. The terminal device may be referred to as a backscatter communication terminal in a passive physical system, and the terminal device may be any one of the terminal devices in the foregoing examples. The passive tag or the passive backscatter communication terminal has no power supply device/circuit, and obtains energy only by relying on a received excitation signal, for example, obtains a direct current voltage of the excitation signal through a filter circuit or the like to obtain energy supply; and enables subsequent demodulation of a downlink signal and/or sending of an uplink signal in an uplink.

Due to limitation of a power consumption and complexity of a backscatter communication terminal, a power consumption of such a terminal may be limited to 100 μW (μW) or a target power consumption less than 100 μW. Under a limitation of the target power consumption, this type of terminal may not have a capability of generating a local high-frequency oscillator, in other words, the terminal does not have a capability of generating and transmitting a local carrier corresponding to a radio frequency. In this case, this type of terminal can demodulate a signal only in a non-coherent demodulation scheme. A most common non-coherent demodulation scheme in a communication principle is envelope detection (Envelope Detection). To be specific, self-mixing (also referred to as self-multiplication) is implemented on a received high-frequency radio frequency signal by using a rectifier diode, and then a high-frequency component is filtered out from the signal by using a baseband low-pass RC filter, to obtain an effective baseband modulation signal envelope. After a baseband modulation signal is further obtained, digital sampling may be performed, and a signal energy (amplitude) comparator may subsequently make an information decision.

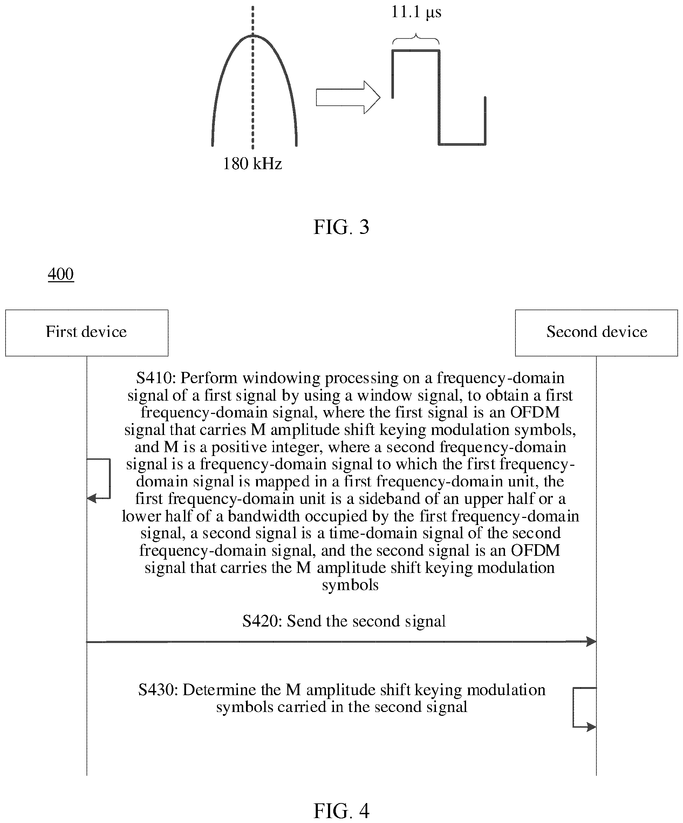

Amplitude shift keying (amplitude shift keying, ASK) modulation is also referred to as amplitude keying modulation. 2ASK is also referred to as on-off keying or on-off keying (on-off keying, OOK). OOK/ASK modulation is an effective modulation scheme that enables envelope detection demodulation without local high-frequency oscillators. Different from a frequently used quadrature modulation scheme such as PSK/QAM that needs in-phase/quadrature (in-phase/quadrature, I/Q) branches in NR, OOK/ASK has only one branch for modulation. Using the OOK/ASK modulation as an example, a transmitter modulates 0/1 information bits into two signal amplitudes. For example, the information bits 0 and 1 are respectively modulated into a rectangular square wave signal with an amplitude 0 and a rectangular square wave signal with an amplitude 1, or into signal waveforms close to a rectangular or square wave. However, the OOK/ASK modulation has a common problem. Because there is only one channel of real signals, a spectrum function of an OOK/ASK modulation signal is conjugate symmetric about a center, namely, a frequency 0, and a power spectrum function is axisymmetric about a center, namely, a frequency 0. For example, a symbol rate of an OOK/ASK signal is R, and a main lobe bandwidth of the signal in frequency domain is 2R. Therefore, a conventional OOK/ASK modulation signal may be referred to as a double-sideband modulation signal, that is, is symmetric about a center-axis, and an effective spectral efficiency is only 50% (Effective signal bandwidth/Actual signal bandwidth=R/2R=50%). As shown in FIG. 3, a transmission bandwidth of the OOK/ASK signal is 180 kHz, an actual effective signal bandwidth is only 90 kHz, and a symbol rate peak is only 1/90 kHz≈11.1 $\mu$s. In this case, a maximum of six OOK/ASK symbols can be carried in duration of one NR orthogonal frequency-division multiplexing (orthogonal frequency-division multiplexing, OFDM) symbol (where a subcarrier spacing is 15 kHz, and symbol duration before a CP is added is 66.7 $\mu$s). Therefore, a frequency domain characteristic of the OOK/ASK that is a natural double-sideband signal greatly limits transmission efficiency of the OOK/ASK. In a passive Internet of things or backscatter communication scenario, overall transmission efficiency of downlink information is also limited.

To improve a spectral efficiency of a downlink signal in a backscatter communication system, it may be considered to eliminate a frequency-domain signal of an upper half sideband or a lower half sideband that is axisymmetric in a double sideband. It is assumed that an OOK/ASK baseband signal is s(t), a corresponding frequency-domain signal is $S(f)$, and Hilbert (Hilbert) transform of the baseband signal is $\hat{s}(t)$. The Hilbert transform specifically means that a frequency domain response modulus value of the signal remains unchanged, and a phase shifts by 90 degrees. To be specific, a frequency-domain signal corresponding to $\hat{s}(t)$ is $j\text{sgn}(f)S(f)$. Therefore, if generated transform of the baseband signal is $m(t) = s(t) \pm j\hat{s}(t)$, frequency domain transform of the transformed baseband signal is $S(f) \pm \text{sgn}(f)S(f)$, and only an upper half sideband or a lower half sideband of the baseband signal may be retained. An I/Q transform signal in such transform is referred to as a single-sideband signal. An example in which an information rate is R is used. For the single-sideband signal, only an upper half or a lower half of a double sideband of the signal is retained, and an actual bandwidth of the signal is also R. In this case, a spectral efficiency increases to 100%. Theoretically, a maximum of 12 OOK/ASK symbols can be carried in duration of one NR OFDM symbol (where a subcarrier spacing is 15 kHz, and symbol duration before a CP is added is 66.7 $\mu$s), and a symbol rate is doubled compared with that of the double-sideband signal.

For the single-sideband signal and the double-sideband signal, if a receiver has a high-frequency local oscillator, and can perform coherent demodulation, a valid original baseband signal s(t) can be correctly recovered. However, a terminal device in the passive Internet of things or backscatter communication can perform only non-coherent envelope detection. Therefore, distortion exists between an envelope $\sqrt{s^2(t) + \hat{s}^2(t)}$ of the single-sideband signal herein and an original signal envelope $\sqrt{s^2(t)}$. Therefore, in the non-coherent demodulation envelope detection manner, demodulation of the original baseband signal s(t) may be greatly affected due to a harmonic term $\hat{s}^2(t)$ introduced for the single-sideband signal, and demodulation performance is greatly reduced.

For the foregoing problem, in embodiments of this application, windowing filtering is performed on a to-be-transmitted downlink signal in frequency domain, so that a time-domain waveform of a single-side signal of the to-be-transmitted downlink signal is closer to a time-domain waveform of an OOK/ASK modulation signal, and a single-sideband frequency-domain characteristic of the OOK/ASK modulation signal is maintained. Transmission performance of transmitting the downlink signal is improved while a transmission spectral efficiency of the downlink signal is ensured.

In embodiments of this application, the amplitude shift keying modulation may include the OOK modulation or the ASK modulation. For ease of understanding, the following uses the OOK/ASK modulation as an example to describe this application.

For ease of understanding of embodiments of this application, the following several descriptions are provided.

First, in the following embodiments, first, second, and various numerical numbers are merely used for distinguishing for ease of description, and are not intended to limit the scope of embodiments of this application. For example, different signals and modulation symbols are distinguished.

Second, "predefinition" may be implemented in a manner of pre-storing corresponding code and a table in a device (for example, including a first device and a second device), or in another manner that may indicate related information. A specific implementation is not limited in this application.

"Pre-configuration" may be implemented by pre-storing corresponding code and a table in the device (for example, including the first device and the second device), or in another manner that may indicate related information, or may be implemented by using signaling pre-configuration. For example, the network device has an implementation by using signaling pre-configuration.

A specific implementation of pre-configuration is not limited in this application.

Third, "protocol" in embodiments of this application may be a standard protocol in the communication field, for example, may include a 3rd generation partnership project (3rd generation partnership project, 3GPP) LTE protocol, an NR protocol, and a related protocol applied to a future communication system. This is not limited in this application.

Fourth, "at least one" means one or more, and "a plurality of" means two or more. The term "and/or" describes an association relationship between associated objects, and represents that three relationships may exist. For example, A and/or B may represent the following three cases: Only A exists, both A and B exist, and only B exists. A and B may be singular or plural.

Fifth, in embodiments of this application, descriptions such as "when", "in a case", and "if" mean that a device (for example, the first device or the second device) performs corresponding processing in an objective situation, and are not intended to limit time, and the device (for example, the first device or the second device) is not required to perform a determining action during implementation; and do not mean any other limitation.

With reference to the accompanying drawings, the following describes in detail a sidelink transmission method provided in embodiments of this application.

It should be understood that, for ease of understanding and description, the following describes in detail the method provided in embodiments of this application by using interaction between the first device and the second device as an example.

The first device may be, for example, the reflector above (for example, the reflector 220) or a terminal device on which the reflector is deployed. The second device may be the exciter above (for example, the exciter 210), a terminal device on which the exciter is deployed, or a network device on which the exciter is deployed. When the first device is the terminal device on which the exciter is deployed, and the second device is the terminal device on which the reflector is deployed, the first device may be the terminal device 124 in FIG. 1, and the second device may be the terminal device 125 or 126 in FIG. 1. When the first device is a network device on which a reader is deployed, and the second device is a terminal device on which a tag is deployed, the first device may be the network device 111 in FIG. 1, and the second device may be any one of the terminal devices 121 to 123 in FIG. 1; or the first device may be the network device 112 in FIG. 1, and the second device may be the terminal device 127 or 128 in FIG. 1.

However, it should be understood that this should not constitute any limitation on an execution entity of the method provided in this application. Any device may serve as the execution entity of the method provided in embodiments of this application provided that a program that records code of the method provided in embodiments of this application can be run according to the method provided in embodiments of this application. For example, the first device shown in the following embodiments may alternatively be replaced with a component, for example, a chip, a chip system, or another functional module that can invoke a program and execute the program, in the first device. The second device may alternatively be replaced with a component, for example, a chip, a chip system, or another functional module that can invoke a program and execute the program, in the second device.

FIG. 4 is a schematic interaction flowchart of a communication method 300 according to an embodiment of this application. As shown in FIG. 4, the method 300 may include some or all of S310 to S330. The following describes the steps in the method 300 in detail.

S310: A first device performs windowing processing on a frequency-domain signal of a first signal by using a window signal, to obtain a first frequency-domain signal, where the first signal is an OFDM signal that carries M amplitude shift keying modulation symbols, and M is a positive integer, where a second frequency-domain signal is a frequency-domain signal to which the first frequency-domain signal is mapped on a first frequency-domain resource, the first frequency-domain resource is an upper half or a lower half of a frequency-domain resource occupied by the first frequency-domain signal, a second signal is a time-domain signal of the second frequency-domain signal, and the second signal is an OFDM signal that carries the M amplitude shift keying modulation symbols.

S320: The first device sends the second signal to a second device. Accordingly, the second device receives the second signal sent by the first device.

S330: The second device determines the M amplitude shift keying modulation symbols carried in the second signal.

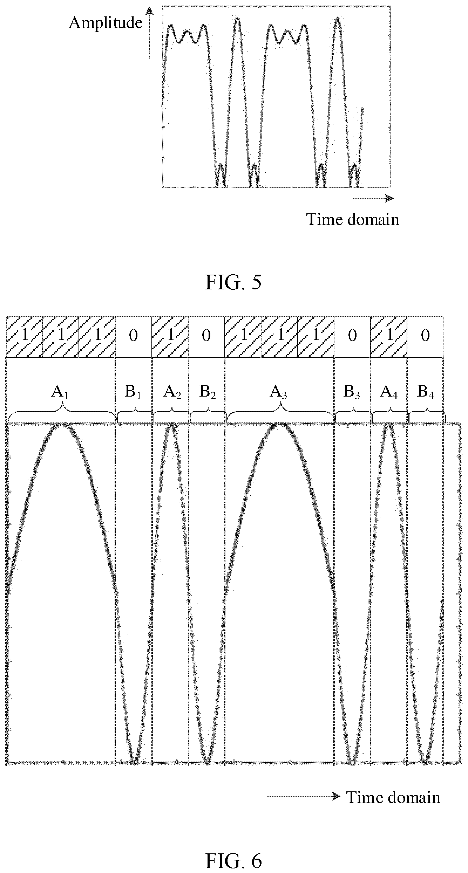

It should be noted that the first signal carries the M amplitude shift keying modulation symbols (such as OOK/ASK modulation symbols). For example, the OOK/ASK modulation symbols carried in the first signal are {111010111010}, and a time-domain signal of the first signal is an ideal OOK/ASK signal. The ideal OOK/ASK signal means that when a modulation symbol is {1}, a value of the signal is always A, where optionally, A is equal to 1; and when the modulation symbol is {0}, the value of the signal is always B, where optionally, B is equal to 0. Refer to FIG. 5.

The frequency-domain signal of the first signal may be obtained by performing time-to-frequency conversion on the time-domain signal of the first signal. The time-to-frequency conversion means performing M-point discrete Fourier transform (discrete Fourier transform, DFT) or fast Fourier transform (fast Fourier transform, FFT) on the time-domain signal. For example, after L-point DFT or FFT is performed on the ideal OOK/ASK signal, a signal on N RBs (12*N subcarriers) that use a first subcarrier as a center is used as the frequency-domain signal of the first signal, that is, a frequency-domain resource of the frequency-domain signal of the first signal occupies N RBs, where N is a positive integer. Optionally, N is equal to 1 or 2. It should be understood that, the frequency-domain signal of the first signal is of conjugate symmetry or modulus symmetry with respect to the first subcarrier, that is, the frequency-domain signal of the first signal presents a double-sideband (or referred to as symmetric upper and lower sidebands) characteristic. Therefore, when N is equal to 2, the frequency-domain resource of the frequency-domain signal of the first signal occupies 24 subcarriers, and the frequency-domain signal of the first signal is defined as

$$\{ NULL, s_1, s_2, \dots, s_{11}, s_{12}, s_{11}^*, \dots, s_2^*, s_1^* \},$$

where NULL indicates that a value of a signal on a $1^{st}$ subcarrier is 0, or indicates that a $1^{st}$ subcarrier is null and no signal is mapped; and * indicates conjugate transposition of an original signal. The first subcarrier may be a subcarrier on which a center frequency of the first signal is located, namely, a subcarrier to which a $\{s_{12}\}$ signal is mapped. In an NR OFDM system, orthogonalization is ensured between a frequency-domain subcarrier corresponding to an OOK/ASK modulation signal and a subcarrier of another signal in an NR system, it is ensured that a generated double-sideband OOK/ASK modulation frequency-domain signal does not interfere with another frequency-domain signal in the NR system, and it is effectively ensured that the OOK/ASK modulation signal is generated on a premise of coexistence of the NR OFDM system.

Optionally, M is an integer multiple of 6 or an integer multiple of 12, or it may be understood that M is an integer multiple of a quantity of subcarriers that corresponds to 1/2 RBs or an integer multiple of a quantity of subcarriers that corresponds to one RB.

In S310, that a first device performs windowing processing on a frequency-domain signal of a first signal by using a window signal may also be referred to as that a first device performs windowing filtering (or may be referred to as frequency-domain windowing or frequency-domain filtering) on a frequency-domain signal of a first signal by using a window signal, so that a time-domain waveform that is of a single-sideband signal of the first frequency-domain signal obtained through the windowing processing and that is closer to that of the first signal can be effectively obtained.

The second frequency-domain signal is the single-sideband signal of the first frequency-domain signal, and may be a signal of an upper half sideband of the first frequency-domain signal or a signal of a lower half sideband of the first frequency-domain signal. In other words, the second frequency-domain signal is the frequency-domain signal to which the first frequency-domain signal is mapped on the first frequency-domain resource. Through the windowing processing in S310, a time-domain waveform of the second frequency-domain signal is close to the time-domain waveform of the first signal. That a time-domain waveform of the second frequency-domain signal is close to the time-domain waveform of the first signal may be understood as that a difference between a peak-to-average power ratio of a high level or a low level in a time-domain waveform of the second signal and a peak-to-average power ratio of a high level or a low level in the time-domain waveform of the first signal is less than a preset value, where the preset value is 0.5 dB or 1 dB; or may be understood as that a difference between an average level value of a modulation symbol {1} or a modulation symbol {0} in a time-domain waveform of the second signal and an average level value of a modulation symbol {1} or a modulation symbol {0} in the time-domain waveform of the first signal is less than a preset value, where the preset value is 0.1 or 0.2. In other words, an OOK/ASK modulation symbol carried in the second signal is the same as the amplitude shift keying modulation symbol carried in the first signal, and duration of the amplitude shift keying modulation symbol carried in the second signal is the same as duration of the amplitude shift keying modulation symbol carried in the first signal, so that a symbol rate of an amplitude shift keying modulation signal remains unchanged.

It should be noted that a frequency-domain resource occupied by a frequency-domain signal of the window signal may be greater than or equal to the frequency-domain resource occupied by the frequency-domain signal of the first signal, or a bandwidth of the frequency-domain signal of the window signal may be greater than or equal to a bandwidth of the frequency-domain signal of the first signal, in other words, the frequency-domain resource occupied by the frequency-domain signal of the window signal is greater than or equal to N RBs. A center frequency of the frequency-domain signal of the window signal is the same as a center frequency of the frequency-domain signal of the first signal, in other words, a frequency-domain resource occupied by the window signal is the same as a frequency-domain resource occupied by the first signal, or the frequency-domain resource occupied by the first signal is in the frequency-domain resource occupied by the window signal.

Generally, during the windowing processing, a frequency-domain signal for the windowing processing and the frequency-domain signal of the first signal need to occupy a same frequency-domain resource, and the frequency-domain resource occupied by the frequency-domain signal of the first signal includes a plurality of subcarriers, so that the frequency-domain signal of the first signal is multiplied by a signal to which the frequency-domain signal of the window signal is mapped on a same subcarrier, to obtain the first frequency-domain signal.

If the window signal and the first signal occupy the same frequency-domain resource, the first device may multiply the frequency-domain signal (namely, a third frequency-domain signal) of the window signal by the signal to which the frequency-domain signal of the first signal is mapped on the same subcarrier, to obtain the first frequency-domain signal. If the window signal and the first signal occupy different frequency-domain resources, for example, the frequency-domain resource occupied by the first signal is in the frequency-domain resource occupied by the window signal, to enable the first device to perform windowing processing on the frequency-domain signal of the first signal by using the window signal, the third frequency-domain signal may be obtained based on the frequency-domain signal of the window signal. For example, a frequency-domain signal to which the frequency-domain signal of the window signal is mapped on a second frequency-domain resource is used as the third frequency-domain signal, where the second frequency-domain resource is the frequency-domain resource occupied by the first signal, so that a frequency-domain resource occupied by the third frequency-domain signal is the same as the frequency-domain resource occupied by the first signal. Then, the third frequency-domain signal is multiplied by a signal to which the frequency-domain signal of the first signal is mapped on the same subcarrier, to obtain the first frequency-domain signal. Therefore, when N is equal to 2, the frequency-domain resource occupied by the third frequency-domain signal is 24 subcarriers, and the frequency-domain resource occupied by the third frequency-domain signal is 24 subcarriers. Optionally, the third frequency-domain signal is defined as

$$\left\{ NULL, b_1, b_2, \cdots, b_{11}, b_{12}, b_{11}^*, \cdots, b_2^*, b_1^* \right\}$$

, where NULL indicates that a value of a signal on a $1^{st}$ subcarrier is 0, or indicates that a $1^{st}$ subcarrier is null and no signal is mapped; and * indicates conjugate transposition of an original signal. The frequency-domain signal of the first signal is multiplied by the third frequency-domain signal on the corresponding same subcarrier to obtain the first frequency-domain signal

$$\left\{ NULL, \bar{s}_1, \bar{s}_2, \cdots, \bar{s}_{11}, \bar{s}_{12}, \bar{s}_{11}^*, \cdots, \bar{s}_2^*, \bar{s}_1^* \right\}$$

. Optionally, the third frequency-domain signal may be a frequency-domain signal that uses a center subcarrier of the frequency-domain signal of the window signal as a center and that occupies the same frequency-domain resource as the frequency-domain signal of the first signal.

That the first frequency-domain resource is an upper half or a lower half of a frequency-domain resource occupied by the first frequency-domain signal means that the first frequency-domain resource is a frequency-domain resource from a center subcarrier to a start subcarrier of the frequency-domain resource or a frequency-domain resource from the center subcarrier to an end subcarrier of the frequency-domain resource, where the first subcarrier is used as the center subcarrier for the first frequency-domain signal. Therefore, when N is equal to 2, valid subcarriers of the frequency-domain resource occupied by the first frequency-domain signal are $1^{st}$ to $23^{rd}$ subcarriers, the center subcarrier is the $12^{th}$ subcarrier, and the first frequency-domain resource may be all subcarriers included in the $1^{st}$ to the $12^{th}$ subcarriers or all subcarriers included in the $12^{th}$ to the $23^{rd}$ subcarriers. The second frequency-domain signal is a signal to which a first frequency-domain signal is mapped on the first frequency-domain resource, namely, a frequency-domain signal of an upper sideband or a lower sideband corresponding to the first frequency-domain signal. In this case, the second frequency-domain signal is defined as $\{\bar{s}_1, \bar{s}_2, ..., \bar{s}_{11}, \bar{s}_{12}\}$ or $\{\bar{s}_{12}, \bar{s}_{11}^*, ..., \bar{s}_2^*, \bar{s}_1^*\}$ .

Optionally, a main lobe bandwidth of the frequency-domain signal of the window signal is greater than or equal to the bandwidth of the frequency-domain signal of the first signal.

Optionally, the window signal may be a raised cosine roll-off window signal. The raised cosine roll-off window signal is:

$$\frac{\sin\left(\pi f_x t\right)}{\pi f_x t} \cdot \frac{\cos\left(\beta \pi f_x t\right)}{1 - \left(2\beta \pi f_x t\right)^2} \, .$$

$\beta$ is a roll-off factor of the raised cosine roll-off window signal, and a value of the roll-off factor is any value greater than 0 and less than 1. A raised cosine roll-off function is a window signal with a high use probability in waveform shaping, and the used raised cosine roll-off window signal is a window signal that is easy to reach a consensus.

Certainly, this is not limited in this application. For example, the window signal may be a signal formed by at least one of a cosine signal $\cos(2\pi f_x t)$, a sine signal $\sin(2\pi f_x t)$, a power $\cos^\alpha(2\pi f_x t)$ of the cosine signal, and a power $\sin^\alpha(2\pi f_x t)$ of the sine signal, or may be another window signal having any waveform. $f_x$ is a frequency, t is duration, and $\alpha$ is a coefficient to a power (the power of the sine signal or the power of the cosine signal).

Optionally, when the window signal includes the power of the cosine signal, the coefficient to the power of the cosine signal may be less than or equal to 1. Similarly, when the window signal includes the power of the sine signal, the coefficient to the power of the sine signal may be less than or equal to 1. When the coefficient to the power of the sine signal or the coefficient to the cosine signal is less than 1, a waveform of the power of the sine signal or a waveform of the power of the cosine signal is flatter, and is closer to a waveform of the ideal OOK/ASK signal.

In some embodiments of S310, to enable the window signal to make the time-domain waveform of the second signal closer to the time-domain waveform of the first signal, the window signal may include at least one first sub-signal associated with a first modulation symbol and at least one second sub-signal associated with a second modulation symbol. It should be noted that the M amplitude shift keying modulation symbols include the first modulation symbol and/or the second modulation symbol. The first modulation symbol is a high-level symbol or the modulation symbol {1} in the OOK/ASK modulation symbols, and the second modulation symbol is a low-level symbol or the modulation symbol {0} in the OOK/ASK modulation symbols.

Continue the foregoing embodiment. A time domain length of one first sub-signal may correspond to a time domain length of consecutive first modulation symbols in a segment in the M amplitude shift keying modulation symbols, and a time domain length of one second sub-signal may correspond to a time domain length of consecutive second modulation symbols in a segment in the M amplitude shift keying modulation symbols. For example, with reference to FIG. 6, the OOK modulation symbols carried in the first signal are {111010111010}. Assuming that the first modulation symbol is {1}, and the second modulation symbol is {0}, the window signal includes first sub-signals $A_1$, $A_2$, $A_3$, and $A_4$ and second sub-signals $B_1$, $B_2$, $B_3$, and $B_4$.

For example, the time domain length of the first sub-signal may be the same as a duration of consecutive first modulation symbols in a segment carried in the first signal. Refer to FIG. 6. A time domain length of the first sub-signal $A_1$ is the same as a duration of three consecutive first modulation symbols {111} in a segment carried in the first signal, a time domain length of the first sub-signal $A_2$ is the same as a duration of consecutive first modulation symbols {1} in a next segment carried in the first signal, and a remaining correspondence between a time domain length of a first sub-signal and a duration of a first modulation symbol is similar to this. Details are not described again.

The time domain length of the second sub-signal may be the same as a duration of consecutive second modulation symbols in a segment carried in the first signal. This is similar to the foregoing example. Refer to FIG. 6. A time domain length of the second sub-signal $B_1$ is the same as a duration of consecutive second modulation symbols {0} in a segment carried in the first signal, a time domain length of the second sub-signal $B_2$ is the same as a duration of consecutive second modulation symbols {0} in a segment carried in the first signal, and a remaining correspondence between a time domain of a second sub-signal and a duration of a second modulation symbol is similar to this. Details are not described again.

It should be noted that the first sub-signal in the window signal and the first modulation symbol have the foregoing time domain association relationship, and the second sub-signal in the window signal and the second modulation symbol also have the foregoing time domain association relationship. Alternatively, the first sub-signal in the window signal and the first modulation symbol have the foregoing time domain association relationship, and the time domain length of the second sub-signal may be irrelevant to the second modulation symbol, and for example, may be a preset value. Alternatively, the second sub-signal in the window signal and the second modulation symbol have the foregoing time domain association relationship, and the time domain length of the first sub-signal may be irrelevant to the first modulation symbol, and for example, may be a preset value.

For example, a frequency of the first sub-signal may be associated with a quantity of consecutive first modulation symbols in a segment carried in the first signal. For example, a larger quantity of consecutive first modulation symbols in the segment carried in the first signal indicates a smaller frequency component included in a first sub-signal corresponding to the consecutive first modulation symbols in the segment, and a smaller quantity of consecutive first modulation symbols in the segment carried in the first signal indicates a larger frequency component included in a first sub-signal corresponding to the consecutive first modulation symbols in the segment. In other words, the frequency component included in the first sub-signal is inversely proportional to the quantity of consecutive first modulation symbols in the segment carried in the first signal or duration of the consecutive first modulation symbols. For example, the first sub-signal is formed by at least one of a cosine signal $\cos(2\pi f_x t)$, a sine signal $\sin(2\pi f_x t)$, a power of the cosine signal $\cos^{\alpha}(2\pi f_x t)$, and a power of the sine signal $\sin^{\alpha}(2\pi f_x t)$, where $f_x$ is inversely proportional to the duration of the consecutive first modulation symbols.

Optionally, the frequency of the first sub-signal may be equal to a reciprocal of the duration of the consecutive first modulation symbols in the segment carried in the first signal.

Similar to the frequency of the first sub-signal, a frequency of the second sub-signal may be associated with a quantity of consecutive second modulation symbols in a segment carried in the first signal. For example, a larger quantity of consecutive second modulation symbols in the segment carried in the first signal indicates a smaller frequency component included in a second sub-signal corresponding to the consecutive second modulation symbols in the segment, and a smaller quantity of consecutive second modulation symbols in the segment carried in the first signal indicates a larger frequency component included in a second sub-signal corresponding to the consecutive second modulation symbols in the segment. In other words, the frequency component included in the second sub-signal is inversely proportional to the quantity of consecutive second modulation symbols in the segment carried in the first signal. For example, the second sub-signal is formed by at least one of a cosine signal $\cos(2\pi f_x t)$, a sine signal $\sin(2\pi f_x t)$, a power of the cosine signal $\cos^{\alpha}(2\pi f_x t)$, and a power of the sine signal $\sin^{\alpha}(2\pi f_x t)$, where $f_x$ is inversely proportional to duration of the consecutive first modulation symbols.

Optionally, the frequency of the second sub-signal may be equal to a reciprocal of the duration of the consecutive second modulation symbols in the segment carried in the first signal.

It should be understood that, the frequency of the first sub-signal in the window signal and the quantity of consecutive first modulation symbols have the foregoing association relationship, and the frequency of the second sub-signal in the window signal and the quantity of consecutive second modulation symbols also have the foregoing association relationship. Alternatively, the frequency of the first sub-signal in the window signal and the quantity of consecutive first modulation symbols have the foregoing association relationship, and the frequency of the second sub-signal in the window signal is irrelevant to the quantity of consecutive second modulation symbols, and for example, may be a preset value. Alternatively, the frequency of the second sub-signal in the window signal and the quantity of consecutive second modulation symbols have the foregoing association relationship, and the frequency of the first sub-signal in the window signal is irrelevant to the quantity of consecutive first modulation symbols, and for example, may be a preset value.

For example, the OOK modulation symbols carried in the first signal are {111010111010}, duration of the OOK modulation symbol is 66.7 $\mu$s/12, and the window signal sequentially includes a first sub-signal $A_1$, a second sub-signal $B_1$, a first sub-signal $A_2$, a second sub-signal $B_2$, a first sub-signal $A_3$, a second sub-signal $B_3$, and a first sub-signal $A_4$. Duration of the first sub-signal $A_1$ is the same as duration of the three consecutive first modulation symbols {111}, and is 3*66.7/12≈16.7 $\mu$s. In this case, a frequency component included in the first sub-signal $A_1$ is 2/16.7 $\mu$s≈120 kHz, where the first sub-signal is a double-sideband signal. For an OFDM system in which a subcarrier spacing is 15 kHz, the frequency component included in the first sub-signal is located on an $8^{th}$ subcarrier and an $(-8)^{th}$ subcarrier, and a center subcarrier is defined as a $0^{th}$ subcarrier. Cases of frequencies of other sub-signals in the window signal are similar to this, and details are not described again.

In some embodiments, when the first sub-signal and the second sub-signal have a same time domain length, the first sub-signal and the second sub-signal are also different, and a difference between the first sub-signal and the second sub-signal may be reflected as a difference in a signal function. For example, the first sub-signal may be represented as

$$a_1(t) = \frac{\left(1 - sin^{\alpha}\left(2\pi f_x t\right)\right)}{2}$$

, and the second sub-signal may be represented as

$$a_2(t) = \frac{\left(1 + sin^{\alpha}\left(2\pi f_x t\right)\right)}{2}$$

, where $\alpha$ is a coefficient to a power of a sine function, $f_x$ is a frequency of a sub-signal (for example, any first sub-signal or any second sub-signal), and t is a time domain length of the sub-signal (for example, any first sub-signal or any second sub-signal).

The example in which the OOK modulation symbols carried in the first signal are {111010111010} is still used. If a $1^{st}$ first sub-signal is represented as

$$a_{1-1}(t) = \frac{\left(1 - sin^{\alpha}\left(2\pi f_1 t\right)\right)}{2}$$

, where $f_1 = \frac{1}{3T_{ook}}$, and $T_{OOK}$ is duration of the OOK modulation symbol, a $1^{st}$ second sub-signal is represented as

$$a_{2-1}(t) = \frac{\left(1 + sin^{\alpha}\left(2\pi f_2 t\right)\right)}{2}$$, where $f_2 = \frac{1}{T_{ook}}$, a $2^{nd}$ first sub-signal is represented as

$$a_{1-2}(t) = \frac{\left(1 - sin^{\alpha}\left(2\pi f_3 t\right)\right)}{2}$$

, where $f_3 = \frac{1}{T_{ook}}$, and so on.

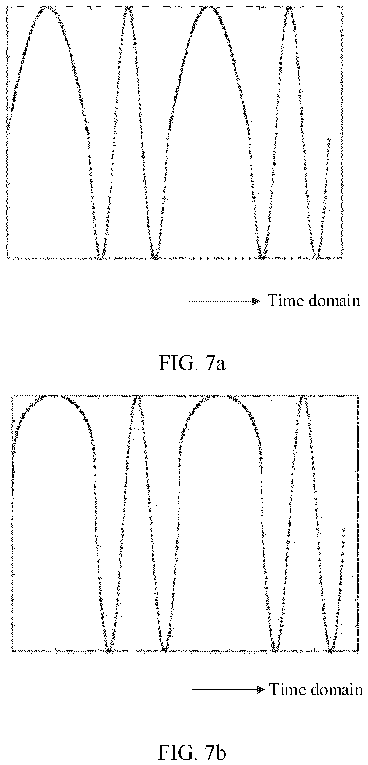

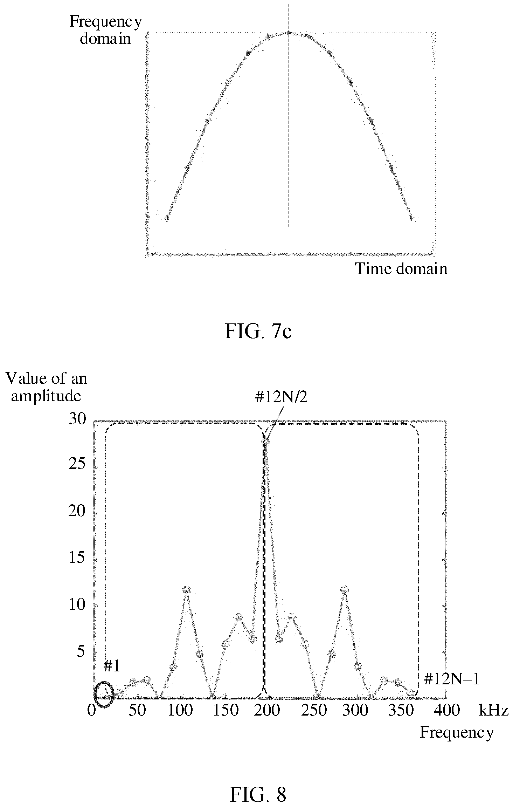

When the coefficient to the power of the sine signal $\alpha$ = 1, the window signal may be shown in FIG. 7a. When the coefficient to the power of the sine signal $\alpha$ < 1, for example, $\alpha$=0.1 or $\alpha$=0.2. When $\alpha$=0.2, the window signal may be shown in FIG. 7b. In this case, for the frequency-domain signal of the window signal, refer to FIG. 7c.

The window signal $a(t)$ may be expressed as:

$$\begin{cases} a_1(t), 0 \le t \le 3T_{OOK} \\ a_2(t), 3T_{OOK} \le t \le 4T_{OOK} \\ a_3(t), 4T_{OOK} \le t \le 5T_{OOK} \\ a_2(t), 5T_{OOK} \le t \le 6T_{OOK} \\ a_1(t), 6T_{OOK} \le t \le 9T_{OOK} \\ a_2(t), 9T_{OOK} \le t \le 10T_{OOK} \\ a_3(t), 10T_{OOK} \le t \le 11T_{OOK} \\ a_2(t), 11T_{OOK} \le t \le 12T_{OOK} \end{cases}$$

Duration of the 12 OOK modulation symbols is equal to duration of one OFDM symbol.

As described above, the window signal may be the signal formed by at least one of a cosine signal, a sine signal, a power of the cosine signal, and a power of the sine signal, and the window signal may include at least one first sub-signal and/or at least one second sub-signal. In some embodiments, any one of the foregoing sub-signals, for example, the first sub-signal or the second sub-signal, may include at least one of a cosine signal, a sine signal, a power of the cosine signal, and a power of the sine signal.

As described above, the second frequency-domain signal is the single-sideband signal of the first frequency-domain signal. For example, with reference to FIG. 8, the frequency-domain resource occupied by the first frequency-domain signal is N RBs (namely, 12N subcarriers). For example, if N=2, a bandwidth occupied by the first frequency-domain signal is 24 subcarriers. Optionally, a value of a frequency-domain signal to which the first frequency-domain signal is mapped on a 1st subcarrier of is 0, and the 1st subcarrier is defined as a subcarrier #0. A value of the subcarrier #0 of the first frequency-domain signal is always 0, that is, valid subcarriers actually occupied by the first frequency-domain signal are subcarriers #1 to #12N-1, and there are 12N-1 subcarriers in total. The second frequency-domain signal is a frequency-domain signal to which the first frequency-domain signal is mapped on the 2nd to the 13th subcarriers, namely, a frequency-domain signal to which the first frequency-domain signal is mapped on the subcarriers #1 to #12N/2 (a lower sideband (low sideband, LSB)). Alternatively, the second frequency-domain signal is a frequency-domain signal to which the first frequency-domain signal is mapped on the 13th to the 24th subcarriers, namely, a frequency-domain signal to which the first frequency-domain signal is mapped on the subcarriers #12N/2 to #12N-1.

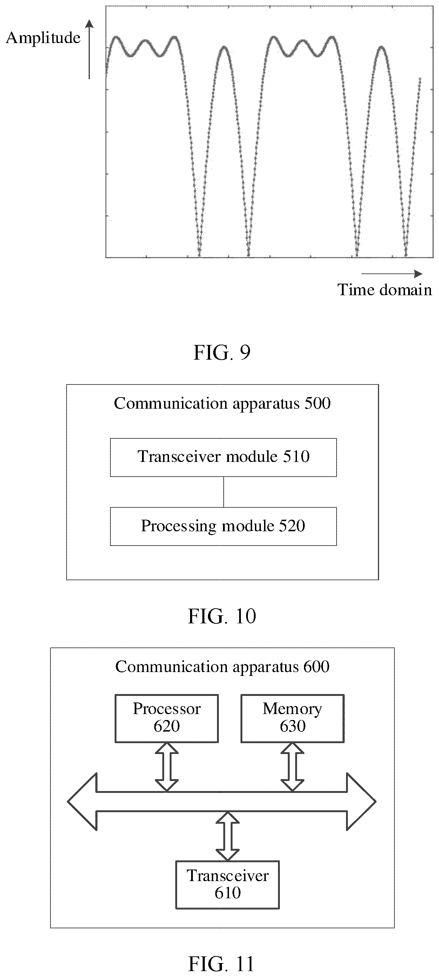

In an example of S320, the first device may perform frequency-to-time (or referred to as frequency-to-time) transformation, namely, inverse discrete Fourier transform (inverse discrete Fourier transform, IDFT) or inverse fast Fourier transform (inverse fast Fourier transform, IFFT), on the second frequency-domain signal to obtain the corresponding second signal in time domain, and send the second signal to the second device. Through the foregoing windowing processing, the amplitude shift keying modulation symbol carried in the second signal is the same as the amplitude shift keying modulation symbol in the first signal, and duration of the amplitude shift keying modulation symbol carried in the second signal is the same as duration of the amplitude shift keying modulation symbol carried in the first signal. For example, the OOK modulation symbols carried in the first signal are {111010111010}, the OOK modulation symbols carried in the second signal are also {111010111010}, and the time-domain waveform of the second signal is shown in FIG. 9. In other words, that the amplitude shift keying modulation symbols carried in the second signal and the first signal are the same means that, the OOK modulation symbols 0 and 1 carried in the second signal and the first signal are the same, and the duration of the OOK modulation symbols carried in the second signal and the first signal is the same. For example, duration of the OOK modulation symbols carried in the first signal shown in FIG. 5 and duration of the OOK modulation symbols carried in the second signal shown in FIG. 9 are both 1/12 of the duration of one OFDM signal. When a subcarrier spacing of the OFDM is 15 kHz, the duration of the OOK modulation symbol is 66.7 $\mu$s/12.

In S330, the second device receives the second signal, and the second signal is the single-sideband signal of the first signal. Therefore, after receiving the second signal, the second device determines, without additional processing, the M amplitude shift keying modulation symbols carried in the first signal, so as to avoid increasing implementation complexity of the second device as a receive end. This avoids increasing a power consumption when the second device receives the second signal.

Therefore, in this embodiment of this application, the windowing processing is performed on the frequency-domain signal of the first signal by using the window signal, so that the time-domain waveform of the single-sideband signal (namely, the second signal) of the first frequency-domain signal obtained through windowing is closer to the time-domain waveform of the first signal, and a feature of improving a transmission spectral efficiency of a single-sideband amplitude shift modulation signal to 100% is maintained. In this way, transmission performance of a downlink signal is ensured while a transmission spectral efficiency of the downlink signal is improved, and an additional increase in the implementation complexity and the power consumption of the receive end are avoided.

FIG. 10 is a block diagram of an apparatus according to an embodiment of this application. As shown in FIG. 10, the apparatus 500 may include a transceiver unit 510 and a processing unit 520.

Optionally, the communication apparatus 500 may correspond to the first device in the foregoing method embodiments, for example, may be the first device or a component (for example, a chip or a chip system) configured in the first device.

It should be understood that the units in the communication apparatus 500 are respectively intended to implement corresponding procedures of the methods in the foregoing embodiments.

The processing unit 520 is configured to perform windowing processing on a frequency-domain signal of a first signal by using a window signal, to obtain a first frequency-domain signal, where the first signal is an orthogonal frequency-division multiplexing OFDM signal that carries M amplitude shift keying modulation symbols, and M is a positive integer, where a second frequency-domain signal is a frequency-domain signal to which the first frequency-domain signal is mapped on a first frequency-domain resource, the first frequency-domain resource is an upper half or a lower half of a frequency-domain resource occupied by the first frequency-domain signal, a second signal is a time-domain signal of the second frequency-domain signal, and the second signal is an OFDM signal that carries the M amplitude shift keying modulation symbols. The transceiver unit 510 is configured to send the second signal.

It should be understood that a specific process in which the units perform the foregoing corresponding steps is described in detail in the foregoing method embodiments, and for brevity, details are not described herein.

Optionally, the communication apparatus 500 may correspond to the second device in the foregoing method embodiments, for example, may be the second device or a component (for example, a chip or a chip system) configured in the second device.

It should be understood that the modules in the communication apparatus 500 are respectively intended to implement corresponding procedures of the methods in the foregoing embodiments.

The transceiver unit 510 is configured to receive a second signal, where the second signal is an OFDM signal that carries M amplitude shift keying modulation symbols, the second signal is a time-domain signal of a second frequency-domain signal, the second frequency-domain signal is a frequency-domain signal to which a first frequency-domain signal is mapped on a first frequency-domain resource, the first frequency-domain resource is an upper half or a lower half of a frequency-domain resource occupied by the first frequency-domain signal, the first frequency-domain signal is a frequency-domain signal obtained by performing windowing processing on a first signal by using a window signal, and the first signal is an OFDM signal that carries the M amplitude shift keying modulation symbols. The processing unit 520 is configured to determine the M amplitude shift keying modulation symbols carried in the second signal.

It should be understood that a specific process in which the units perform the foregoing corresponding steps is described in detail in the foregoing method embodiments, and for brevity, details are not described herein.

When the apparatus 500 is the first device or the second device, the transceiver unit 510 in the apparatus 500 may be implemented as a transceiver, for example, may correspond to a transceiver 610 in an apparatus 600 shown in FIG. 11; and the processing unit 520 in the apparatus 500 may be implemented as at least one processor, for example, may correspond to a processor 620 in the apparatus 600 shown in FIG. 11.

When the apparatus 500 is a chip or a chip system configured in a communication device (for example, the first device or the second device), the transceiver unit 510 in the apparatus 500 may be implemented as an input/output interface, a circuit, or the like, and the processing unit 520 in the apparatus 500 may be implemented as a processor, a microprocessor, an integrated circuit, or the like integrated into the chip or the chip system.

FIG. 11 is another block diagram of an apparatus according to an embodiment of this application. As shown in FIG. 11, the apparatus 600 includes a transceiver 610, a processor 620, and a memory 630. The transceiver 610, the processor 620, and the memory 630 communicate with each other through an internal connection path, the memory 630 is configured to store instructions, and the processor 620 is configured to execute the instructions stored in the memory 630, to control the transceiver 610 to send a signal and/or receive a signal.

It should be understood that the apparatus 600 may correspond to the first device or the second device in the foregoing method embodiments, and may be configured to perform each step and/or procedure performed by the first device or the second device in the foregoing method embodiments. Optionally, the memory 630 may include a read-only memory and a random access memory, and provide the instructions and data for the processor. A part of the memory may further include a non-volatile random access memory. The memory 630 may be an independent device, or may be integrated into the processor 620. The processor 620 may be configured to execute the instructions stored in the memory 630. When the processor 620 executes the instructions stored in the memory, the processor 620 is configured to perform each step and/or procedure corresponding to the first device or the second device in the method embodiments.

Optionally, the apparatus 600 is the first device in the foregoing embodiments.

Optionally, the apparatus 600 is the second device in the foregoing embodiments.

The transceiver 610 may include a transmitter and a receiver. The transceiver 610 may further include an antenna. There may be one or more antennas. The processor 620, the memory 630, and the transceiver 610 may be components integrated into different chips. For example, the processor 620 and the memory 630 may be integrated into a baseband chip, and the transceiver 610 may be integrated into a radio frequency chip. Alternatively, the processor 620, the memory 630, and the transceiver 610 may be components integrated into a same chip. This is not limited in this application.

Optionally, the apparatus 600 is a component configured in the first device, for example, a chip or a chip system.

Optionally, the apparatus 600 is a component configured in the second device, for example, a chip or a chip system.

Alternatively, the transceiver 620 may be a communication interface, for example, an input/output interface or a circuit. The transceiver 620, the processor 610, and the memory 630 may be integrated into the same chip, for example, integrated into the baseband chip.

This application further provides a processing apparatus, including at least one processor. The at least one processor is configured to execute a computer program stored in a memory, so that the processing apparatus performs the method performed by the first device or the second device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the first device or the second device in the foregoing method embodiments.

An embodiment of this application further provides a processing apparatus, including a processor and a memory. The memory is configured to store a computer program. The processor is configured to invoke the computer program from the memory and run the computer program, so that the processing apparatus performs the method performed by the first device or the second device in the foregoing method embodiments.

It should be understood that the processing apparatus may be one or more chips. For example, the processing apparatus may be a field programmable gate array (field programmable gate array, FPGA), an application-specific integrated chip (application specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the methods in combination with hardware thereof. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the methods in combination with hardware thereof.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and methods described in this specification includes but is not limited to these and any other suitable types of memories.

According to the method provided in embodiments of this application, this application further provides a computer program product. The computer program product includes computer program code. When the computer program code is run on a computer, the computer is enabled to perform the method performed by the first device or the second device in the foregoing method embodiments.

According to the method provided in embodiments of this application, this application further provides a computer-readable storage medium. The computer-readable storage medium stores program code. When the program code is run on a computer, the computer is enabled to perform the method performed by the first device or the second device in the foregoing method embodiments.

According to the method provided in embodiments of this application, this application further provides a communication system. The communication system may include the first device and the second device described above.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application and a computing device that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of embodiments.

In addition, functional modules in embodiments of this application may be integrated into one processing unit, or each of the modules may exist alone physically, or two or more modules are integrated into one module.

When the functions are implemented in the form of a software functional module and sold or used as an independent product, the functions may be stored in a computer-readable storage medium. Based on such an understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

    performing windowing processing on a frequency-domain signal of a first signal by using a window signal, to obtain a first frequency-domain signal, wherein the first signal is an orthogonal frequency-division multiplexing OFDM signal that carries M amplitude shift keying modulation symbols, and M is a positive integer, wherein
    a second frequency-domain signal is a frequency-domain signal to which the first frequency-domain signal is mapped on a first frequency-domain resource, the first frequency-domain resource is an upper half or a lower half of a frequency-domain resource occupied by the first frequency-domain signal, a second signal is a time-domain signal of the second frequency-domain signal, and the second signal is an OFDM signal that carries the M amplitude shift keying modulation symbols; and
sending the second signal.

2. The method according to claim 1, wherein the performing windowing processing on a frequency-domain signal of a first signal by using a window signal, to obtain a first frequency-domain signal comprises:

a third frequency-domain signal is a frequency-domain signal to which a frequency-domain signal of the window signal is mapped on a second frequency-domain resource, the second frequency-domain resource is the same as a frequency-domain resource occupied by the frequency-domain signal of the first signal, and a frequency-domain resource occupied by the frequency-domain signal of the window signal is greater than or equal to the frequency-domain resource occupied by the frequency-domain signal of the first signal;
multiplying the frequency-domain signal of the first signal by a signal to which the third frequency-domain signal is mapped on a same subcarrier, to obtain the first frequency-domain signal.

3. The method according to claim 1 or 2, wherein the window signal comprises at least one first sub-signal and/or at least one second sub-signal, wherein

a time domain length of the first sub-signal is the same as a duration of consecutive first modulation symbols in a segment carried in the first signal; and/or
a time domain length of the second sub-signal is the same as a duration of consecutive second modulation symbols in a segment carried in the first signal, wherein
the M amplitude shift keying modulation symbols comprise the first modulation symbol and/or the second modulation symbol.

4. The method according to any one of claims 1 to 3, wherein the window signal comprises at least one first sub-signal and/or at least one second sub-signal, wherein

a frequency of the first sub-signal is associated with a quantity of consecutive first modulation symbols in the segment carried in the first signal; and/or
a frequency of the second sub-signal is associated with a quantity of consecutive second modulation symbols in the segment carried in the first signal.

5. The method according to claim 4, wherein

the frequency of the first sub-signal is inversely proportional to the quantity of consecutive first modulation symbols in the segment carried in the first signal; and/or
the frequency of the second sub-signal is inversely proportional to the quantity of consecutive second modulation symbols in the segment carried in the first signal.

6. The method according to claim 5, wherein

the frequency of the first sub-signal is equal to a reciprocal of the duration of the consecutive first modulation symbols in the segment carried in the first signal; and/or
the frequency of the second sub-signal is equal to a reciprocal of the duration of the consecutive second modulation symbols in the segment carried in the first signal.

7. The method according to any one of claims 1 to 6, wherein any sub-signal of the window signal comprises at least one of the following:

a cosine signal;
a sine signal;
a power of the cosine signal; and
a power of the sine signal.

8. The method according to any one of claims 1 to 7, wherein any sub-signal of the window signal comprises at least one of the following:

a power of a cosine signal; and
a power of a sine signal, wherein
at least one of a coefficient to the power of the cosine signal and a coefficient to the power of the sine signal is less than or equal to 1.

9. The method according to any one of claims 1 to 8, wherein the window signal is a raised cosine roll-off window signal.

10. A communication method, wherein the method comprises:

receiving a second signal, wherein the second signal is an OFDM signal that carries M amplitude shift keying modulation symbols, the second signal is a time-domain signal of a second frequency-domain signal, the second frequency-domain signal is a frequency-domain signal to which a first frequency-domain signal is mapped on a first frequency-domain resource, the first frequency-domain resource is an upper half or a lower half of a frequency-domain resource occupied by the first frequency-domain signal, the first frequency-domain signal is a frequency-domain signal obtained by performing windowing processing on a first signal by using a window signal, and the first signal is an OFDM signal that carries the M amplitude shift keying modulation symbols; and

determining the M amplitude shift keying modulation symbols carried in the second signal.

11. The method according to claim 10, wherein a third frequency-domain signal is a frequency-domain signal to which a frequency-domain signal of the window signal is mapped on a second frequency-domain resource, the second frequency-domain resource is the same as a frequency-domain resource occupied by a frequency-domain signal of the first signal, a frequency-domain resource occupied by the frequency-domain signal of the window signal is greater than or equal to the frequency-domain resource occupied by the frequency-domain signal of the first signal, and a signal obtained by multiplying the frequency-domain signal of the first signal by a signal to which the third frequency-domain signal is mapped on a same subcarrier is equal to a signal of the first frequency-domain signal on the same subcarrier.

12. The method according to claim 10 or 11, wherein the window signal comprises at least one first sub-signal and/or at least one second sub-signal, wherein

a time domain length of the first sub-signal is the same as a duration of consecutive first modulation symbols in a segment carried in the first signal; and/or
a time domain length of the second sub-signal is the same as a duration of consecutive second modulation symbols in a segment carried in the first signal, wherein
the M amplitude shift keying modulation symbols comprise the first modulation symbol and/or the second modulation symbol.

13. The method according to any one of claims 10 to 12, wherein the window signal comprises at least one first sub-signal and/or at least one second sub-signal;

a frequency of the first sub-signal is associated with a quantity of consecutive first modulation symbols in the segment carried in the first signal; and/or
a frequency of the second sub-signal is associated with a quantity of consecutive second modulation symbols in the segment carried in the first signal.

14. The method according to claim 13, wherein

the frequency of the first sub-signal is inversely proportional to the quantity of consecutive first modulation symbols in the segment carried in the first signal; and/or
the frequency of the second sub-signal is inversely proportional to the quantity of consecutive second modulation symbols in the segment carried in the first signal.

15. The method according to claim 14, wherein

the frequency of the first sub-signal is equal to a reciprocal of the duration of the consecutive first modulation symbols in the segment carried in the first signal; and/or
the frequency of the second sub-signal is equal to a reciprocal of the duration of the consecutive second modulation symbols in the segment carried in the first signal.

16. The method according to any one of claims 10 to 15, wherein any sub-signal of the window signal comprises at least one of the following:

a cosine signal;
a sine signal;
a power of the cosine signal; and
a power of the sine signal.

17. The method according to any one of claims 10 to 16, wherein any sub-signal of the window signal comprises at least one of the following:

a power of a cosine signal; and
a power of a sine signal, wherein
at least one of a coefficient to the power of the cosine signal and a coefficient to the power of the sine signal is less than or equal to 1.

18. The method according to any one of claims 10 to 17, wherein the window signal is a raised cosine roll-off window signal.

19. A communication method, wherein the method comprises:

performing, by a first device, windowing processing on a frequency-domain signal of a first signal by using a window signal, to obtain a first frequency-domain signal, wherein the first signal is an OFDM signal that carries M amplitude shift keying modulation symbols, and M is a positive integer, wherein
a second frequency-domain signal is a frequency-domain signal to which the first frequency-domain signal is mapped on a first frequency-domain resource, the first frequency-domain resource is an upper half or a lower half of a frequency-domain resource occupied by the first frequency-domain signal, a second signal is a time-domain signal of the second frequency-domain signal, and the second signal is an OFDM signal that carries the M amplitude shift keying modulation symbols;

sending, by the first device, the second signal to a second device; and

determining, by the second device, the M amplitude shift keying modulation symbols carried in the second signal.

20. The method according to claim 19, wherein the performing, by a first device, windowing processing on a frequency-domain signal of a first signal by using a window signal, to obtain a first frequency-domain signal comprises:

a third frequency-domain signal is a frequency-domain signal to which a frequency-domain signal of the window signal is mapped on a second frequency-domain resource, the second frequency-domain resource is the same as a frequency-domain resource occupied by the frequency-domain signal of the first signal, and a frequency-domain resource occupied by the frequency-domain signal of the window signal is greater than or equal to the frequency-domain resource occupied by the frequency-domain signal of the first signal;

multiplying the frequency-domain signal of the first signal by a signal to which the third frequency-domain signal is mapped on a same subcarrier, to obtain the first frequency-domain signal.

21. The method according to claim 19 or 20, wherein the window signal comprises at least one first sub-signal and/or at least one second sub-signal, wherein

a time domain length of the first sub-signal is the same as a duration of consecutive first modulation symbols in a segment carried in the first signal; and/or

a time domain length of the second sub-signal is the same as a duration of consecutive second modulation symbols in a segment carried in the first signal, wherein

the M amplitude shift keying modulation symbols comprise the first modulation symbol and/or the second modulation symbol.

22. The method according to any one of claims 19 to 21, wherein the window signal comprises at least one first sub-signal and/or at least one second sub-signal, wherein

a frequency of the first sub-signal is associated with a quantity of consecutive first modulation symbols in the segment carried in the first signal; and/or

a frequency of the second sub-signal is associated with a quantity of consecutive second modulation symbols in the segment carried in the first signal.

23. The method according to claim 22, wherein

the frequency of the first sub-signal is inversely proportional to the quantity of consecutive first modulation symbols in the segment carried in the first signal; and/or

the frequency of the second sub-signal is inversely proportional to the quantity of consecutive second modulation symbols in the segment carried in the first signal.

24. The method according to any one of claims 19 to 23, wherein any sub-signal of the window signal comprises at least one of the following:

a cosine signal;
a sine signal;
a power of the cosine signal; and
a power of the sine signal.

25. The method according to any one of claims 19 to 24, wherein any sub-signal of the window signal comprises at least one of the following:

a power of a cosine signal; and
a power of a sine signal, wherein
at least one of a coefficient to the power of the cosine signal and a coefficient to the power of the sine signal is less than or equal to 1.

26. A communication apparatus, comprising:

a processing unit, configured to perform windowing processing on a frequency-domain signal of a first signal by using a window signal, to obtain a first frequency-domain signal, wherein the first signal is an OFDM signal that carries M amplitude shift keying modulation symbols, and M is a positive integer, wherein

a second frequency-domain signal is a frequency-domain signal to which the first frequency-domain signal is mapped on a first frequency-domain resource, the first frequency-domain resource is an upper half or a lower half of a frequency-domain resource occupied by the first frequency-domain signal, a second signal is a time-domain signal of the second frequency-domain signal, and the second signal is an OFDM signal that carries the M amplitude shift keying modulation symbols; and
a transceiver unit, configured to send the second signal.

27. A communication apparatus, comprising:

a transceiver unit, configured to receive a second signal, wherein the second signal is an OFDM signal that carries M amplitude shift keying modulation symbols, the second signal is a time-domain signal of a second frequency-domain signal, the second frequency-domain signal is a frequency-domain signal to which a first frequency-domain signal is mapped on a first frequency-domain resource, the first frequency-domain resource is an upper half or a lower half of a frequency-domain resource occupied by the first frequency-domain signal, the first frequency-domain signal is a frequency-domain signal obtained by performing windowing processing on a first signal by using a window signal, and the first signal is an OFDM signal that carries the M amplitude shift keying modulation symbols; and
a processing unit, configured to determine the M amplitude shift keying modulation symbols carried in the second signal.

28. A communication system, comprising a first device and a second device, wherein
the first device is configured to implement the method according to any one of claims 1 to 9, and the second device is configured to implement the method according to any one of claims 10 to 18.

29. A communication apparatus, comprising a processor and a memory, wherein the memory is configured to store a computer program, and the processor is configured to invoke and run the computer program stored in the memory, to perform the method according to any one of claims 1 to 18.

30. A chip, comprising a processor, wherein the processor is configured to invoke computer instructions from a memory and run the computer instructions, to enable a device in which the chip is installed to perform the method according to any one of claims 1 to 18.

31. A computer-readable storage medium, configured to store computer program instructions, wherein the computer program enables a computer to perform the method according to any one of claims 1 to 18.

32. A computer program product, comprising computer program instructions, wherein the computer program instructions enable a computer to perform the method according to any one of claims 1 to 18.

Communication system 100

FIG. 1

Passive Internet of things system 200

Exciter 210

Excitation signal

Reflector 220

Reflected signal

FIG. 2

FIG. 3

<u>400</u>

| First device | | Second device |
|---|---|---|

S410: Perform windowing processing on a frequency-domain signal of a first signal by using a window signal, to obtain a first frequency-domain signal, where the first signal is an OFDM signal that carries M amplitude shift keying modulation symbols, and M is a positive integer, where a second frequency-domain signal is a frequency-domain signal to which the first frequency-domain signal is mapped in a first frequency-domain unit, the first frequency-domain unit is a sideband of an upper half or a lower half of a bandwidth occupied by the first frequency-domain signal, a second signal is a time-domain signal of the second frequency-domain signal, and the second signal is an OFDM signal that carries the M amplitude shift keying modulation symbols

S420: Send the second signal

S430: Determine the M amplitude shift keying modulation symbols carried in the second signal

FIG. 4

FIG. 5

FIG. 6

Time domain

FIG. 7a

Time domain

FIG. 7b

FIG. 7c

FIG. 8

FIG. 9

FIG. 10

FIG. 11

## INTERNATIONAL SEARCH REPORT

| | International application No. |
|---|---|
| | **PCT/CN2023/104287** |

### A.   CLASSIFICATION OF SUBJECT MATTER

H04L 27/26(2006.01)i

According to International Patent Classification (IPC) or to both national classification and IPC

### B.   FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 反向散射通信, 激励器, 正交频分复用, 加窗, 滤波, 频域, 时域, 幅移键控调制, backscatter communication, OFDM, window+, filter+, frequency, time, domain, ASK

### C.   DOCUMENTS CONSIDERED TO BE RELEVANT

| Category* | Citation of document, with indication, where appropriate, of the relevant passages | Relevant to claim No. |
|---|---|---|
| X | CN 102694761 A (ZTE CORP.) 26 September 2012 (2012-09-26) description, paragraphs [0055]-[0109], and figures 1-10 | 1-32 |
| X | CN 102664860 A (HARBIN INSTITUTE OF TECHNOLOGY) 12 September 2012 (2012-09-12) description, paragraphs [0023]-[0049], and figures 1-11 | 1-32 |
| A | CN 106936754 A (HUAWEI TECHNOLOGIES CO., LTD.) 07 July 2017 (2017-07-07) entire document | 1-32 |
| A | CN 102024160 A (SIEMENS AG) 20 April 2011 (2011-04-20) entire document | 1-32 |
| A | US 2007092018 A1 (TRELLIS PHASE COMMUNICATIONS, LP) 26 April 2007 (2007-04-26) entire document | 1-32 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 September 2023** | **28 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/104287**

| Patent document cited in search report | | | Publication date (day/month/year) | Patent family member(s) | | | Publication date (day/month/year) |
|---|---|---|---|---|---|---|---|
| CN | 102694761 | A | 26 September 2012 | WO | 2012126200 | A1 | 27 September 2012 |
| CN | 102664860 | A | 12 September 2012 | | None | | |
| CN | 106936754 | A | 07 July 2017 | WO | 2017114025 | A1 | 06 July 2017 |
| CN | 102024160 | A | 20 April 2011 | EP | 2299642 | A2 | 23 March 2011 |
| | | | | EP | 2299642 | A3 | 26 December 2012 |
| US | 2007092018 | A1 | 26 April 2007 | US | 2009279422 | A1 | 12 November 2009 |
| | | | | US | 7920637 | B2 | 05 April 2011 |
| | | | | US | 7532676 | B2 | 12 May 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210970268